# EUROPEAN PATENT SPECIFICATION

(11) **EP 3 349 588 B1**
(45) Date of publication and mention of the grant of the patent: **22.01.2025**
(21) Application number: 16778469.3
(22) Date of filing: 13.09.2016
(51) Int. Cl.: A22C 21/00

(54) **APPARATUS, SYSTEM AND METHOD FOR REMOVING FURCULAE FROM POULTRY BREAST CAPS.**
VORRICHTUNG, SYSTEM UND VERFAHREN ZUM ETNFERNEN DES GABELBEINS AUS EINEM GEFLÜGELBRUST.
DISPOSITIF, SYSTÈME ET PRODÉDÉ POUR ENLÉVER LA FOURCHETTE DU BLANC DE POULET.

(30) Priority: 14.09.2015 NL 2015436
(43) Date of publication of application: 25.07.2018
(73) Proprietor: Foodmate B.V., 3281 NJ Numansdorp (NL)
(72) Inventor: VAN DER END, Maarten, 3281 NJ Numansdorp (NL); HAZENBROEK, Jacobus Eliza, 3281 NJ Numansdorp (NL)
(74) Representative: V.O.
(86) International application number: PCT/NL2016/050631
(87) International publication number: WO 2017/048118

(56) References cited:
- EP-A1- 0 336 162
- EP-A2- 2 289 340
- EP-A2- 2 606 737
- WO-A2-2011/068402
- US-A- 5 833 527
- US-A1- 2014 004 781

## Description

The invention relates to an apparatus, system and method for automatically deboning poultry breast caps containing meat, skeletal structure and furcula for obtaining furcula free breast caps.

In a known method the furcula is removed manually. The furcula is difficult to remove due to its delicate V-shaped structure and anatomical location. In conjunction with the coracoid and the scapula the furcula forms a structure known as the triosseal canal. This canal houses a strong tendon which is attached to the furcula. The furcula is further embedded in breast meat. During removal of the furcula it is common for the furcula to fracture riddling a poultry carcass with small bone fragments. Due to the strong presence of tendon tissue the furcula is further often removed at the expense of a considerable portion of breast meat.

In another known method the removal of the furcula is automated. Due to natural variations in the size of the poultry breast caps and anatomical difference the automated method is inclined to produce inconsistent removal results. Oftentimes, in order to prevent the fracturing of the furcula, more meat is removed than is required. It frequently occurs that the furcula remains partly attached to a tendon, damaging the filet by ripping attached muscle tissue upon removal. It is also common for the furcula to fracture, and to damage surrounding tissue when extracted in a fractured state. Remaining bone fragments are further also a hazard for the consumer. Ingestion of sharp bone material may further also result in a variety of gastrointestinal issues. The automated removal of the furcula often leads to damaging of the filet of the poultry breast caps, which is generally the most expensive part of any poultry carcass.

In yet another known automated method the furcula is cut while inside the poultry breast cap and removed in separate parts. In such a method bone splinters, often a result from cutting, remain present in or on the meat during further processing steps which may result an inferior product or in an unfavorable consumer experience. Another example of automated device performing the removal of the furcula can be found in the document WO2011068402 A2 where the cutting device is actuated by various cam followers running on cam tracks of a drum.

According to an update of the U.S. Department of Agriculture July 10^{th}, 2015 the U.S. domestic consumption of poultry is approximately 47.9kg per capita per year and is expected to grow to 48.8kg by 2016. These numbers are reported on a carcass-weight basis and further back a worldwide continually rising demand for poultry.

Accordingly, a need is felt for a furcula remover apparatus capable of extracting a furcula with minimal loss of meat while preventing the fracturing of the furcula during the removal process thereof. There is further also a need felt to prevent the spread of bone fragments or splinters to the rest of the carcass in the event of fracturing a furcula during extraction proceedings thereof.

Accordingly it is an object of the invention to provide such a remover apparatus and the ability to overcome or reduce at least one of the disadvantages of the prior art. It is further also an object of the invention to provide alternative solutions which are less cumbersome in assembly and operation. Alternatively, it is an object of the invention to at least provide a useful alternative.

To this end the invention provides for an apparatus, a poultry breast filleting system and a method as defined in one or more of the appended claims.

The present invention accomplishes the reliable removal of furculae from poultry breast caps while preventing or at least substantially reducing the contamination of meat with bone fragments, shards or splinters and the damaging of meat.

According to a first aspect of the invention the furcula remover apparatus, for a poultry breast fileting system, comprises a guide frame. The guide frame is arranged for attachment to a main body of a poultry breast fileting system in a conveying path thereof in a plane of conveyance. The furcula remover apparatus further comprises a carriage, which is slidably mounted to the guide frame for translatory movement with respect to the guide frame. This movement is between a first position upstream of a direction of conveyance and a second position downstream of the direction of conveyance. The furcula remover apparatus also comprises a furcula grappling unit, which is moveably connected to the carriage for movement in a direction perpendicular to the plane of conveyance. This movement is between a retracted and an extended position. It will be appreciated that movement in the direction perpendicular to the plane of conveyance also includes a pivoting movement of which the turning circle theoretically contains a point along which a motion is substantially perpendicular to the plane of conveyance. It will further be understood that the plane of conveyance also means a local plane of conveyance in the vicinity of the furcula remover apparatus.

The furcula grappling unit includes a guide unit on a downstream end thereof. A knife carrier is slidably connected to the guide unit, for movement between a retracted and extended position and for grappling a furcula of a poultry carcass when extended. The furcula grappling unit, when in use and the guide frame attached to a poultry breast fileting system, is arranged for being engaged by one of a mandrel or a conveyor component of a poultry fileting system for movement from the first position to the second position. It will be appreciated that the guide frame may be height and position adjustable, allowing the apparatus to be adjusted according to the needs of the fileting system.

The carriage is resiliently biased into the first position, for receiving the poultry carcass, and arranged for moving to the second position against the resilient bias when engaged. This motion of the carriage enables the co-movement of carriage and the mandrel in the direction of conveyance such that all extraction related operations are performed at the same speed relative to a poultry breast cap resting on the mandrel. This enables the apparatus to maintain the same precision during the extraction at varying mandrel velocity or speed. As a result the furcula can be extracted in a controlled manner reducing the risk of fracturing the furcula.

The furcula remover apparatus is suitable for use in automatic deboning systems for poultry breast caps wherein preferably the conveying path extends through a substantially horizontal plane.

Optionally the carriage has a first linear actuator connected to the grappling unit for moving the grappling unit between the retracted and the extended positions. Preferably the first linear actuator is a pneumatic cylinder. It will be understood that the extraction of the furcula occurs during a retraction of the grappling unit. This has the benefit of allowing retraction and extension of the grappling unit to be controlled reducing the chance of damage to meat. When using a linear actuator the grappling unit can be returned faster to its extended position than when only under gravitational effect. This increases the speed of the extraction of the furcula and subsequently shorts the time needed for the extraction process.

Optionally the carriage has a second linear actuator connected to the knife carrier for sliding the knife carrier along the guide unit for grappling of the furcula. The second linear actuator is preferably pneumatic. In this way the grappling speed (speed at which the knife carrier extends) is controllable and can be adjusted. The grappling of the furcula can then be performed with a consistent motion at variety of mandrel velocities. A further benefit is that the velocity of extension can be adjusted to prevent fracturing of the furcula. Additionally, this allows retraction of the knife carrier to be adjusted such that the furcula is released when there is a reduced chance of contaminating the poultry breast cap with bone material such as splinters or fragments. It will be understood that the retraction of the knife carrier can be adjusted to release the furcula prior to being engaged by a next mandrel, such that contamination of possible bone material with a next poultry breast cap on the next mandrel is prevented or at least substantially reduced. The grappling motion can also be controlled and force limited. For example, this may be accomplished when using a pneumatic actuator by setting a predetermined pneumatic pressure. This may prevent accidental engagement of non-furcula related objects, materials or tissues.

Optionally the carriage is resiliently biased into the first position by a spring-loaded bias, a pneumatical bias, a magnetic bias, electrical bias, for example a servo motor, or a force bias. It will be understood that any combination of the prior is also possible. To this end the carriage will automatically return to its first position.

Optionally the resilient bias is generated by at least one helically wound spring. In this way the resilient bias is cost effective, requires relatively low maintenance and is highly reliable. The spring furthermore allows for the storage of kinetic potential energy to be released for moving the carriage opposite the direction of conveyance without the need of actuation.

Optionally the furcula grappling unit is pivotally connected to the carriage. It will be appreciated that the furcula grappling unit is arranged for pivoting between an extended position, towards the conveying path, and a retracted position, away from the conveying path. It will further be appreciated that in the extended position the grappling unit is angled towards the conveying path. Due to the nature of the pivoting motion of the grappling unit, it is further provided with the ability to move slightly in the direction of motion of the mandrel (conveyance), independent of the carriage. The pivoting motion is able to buffer an impact caused by engagement. In this way the apparatus allows for high-speed processing for the extraction of furculae from poultry breast caps. Additionally, the pivoting motion may also facilitate disengagement from a mandrel and prevent possible jamming of the apparatus.

Optionally the carriage can be arranged for engagement via the furcula grappling unit. Allowing the carriage to be engaged via the furcula grappling unit, rather than directly by the mandrel beneficially provides additional shock-buffering. Furthermore this allows an apparatus only to be engaged by a mandrel when the grappling unit is ready for engagement.

Additionally, and/or alternatively, the carriage can be engaged by the mandrel resulting in the co-movement of the carriage and the grappling unit.

Optionally the guide unit includes a central guide track. In this way the knife carrier is more accurately guided along a dedicated guide track.

Optionally the knife carrier includes a cutting element for cutting tendon tissue attached to the furcula. This provides a cutting element which assists in the grappling of the furcula by clearing attached tendon tissue.

Optionally, the cutting element includes a wedge shaped blade having converging cutting edges. In this way the wedge shaped blade provides the ability to wedge the furcula into position for grappling and additionally cuts tendon tissue. This improves the accessibility of the furcula for extraction.

Optionally the cutting element is mounted on the central guide track. In this way the cutting element cuts in accordance with the symmetry of the poultry breast cap. This allows for the wedging to occur in the plane of symmetry of the poultry breast cap.

Optionally the knife carrier includes a pair of gripping elements. A benefit is that this allows the symmetrical gripping of the furcula in the poultry breast cap. It will be understood that the gripping edges may also be able to cut in and along the direction of their movement. Preferably each gripping element has a gripping slat. In this way both a flat clamping surface and a sharp cutting edge or gripping edge can be provided.

Optionally the cutting element and the gripping elements, preferably gripping slats, are arranged to converge into a common meeting point. In this way all cuts of the gripping elements and cutting element meet up at a single point enabling simultaneous detachment of the cut out furcula and attached tissue. This further prevents the furcula from remaining attached to the carcass via any tendon tissue.

Optionally the gripping slats have gripping edges converging to one another. This provides a converging shape for the gripping slats. As such the gripping slats are matched or at least adjusted to the form of the furcula. Such that the gripping of the furcula will provide a desired force distribution over the furcula during the grappling thereof. This reduces the possibility of a fracture and splintering. Additionally, this has the benefit of sparing tissue during the extraction of the furcula. In this way consistent removal results are achieved with regard to natural variation in size of poultry breast caps and slight anatomical differences.

Optionally the converging gripping edges include mutually abuttable cutting edges. This allows the edges to converge on their cutting edges. Each gripping edge is able to provide a cut which meets up with the other, effectively detaching the gripped tissue from the remainder of the poultry breast cap. Bone can be held behind the abuttable cutting edges preventing contamination of meat in the event of a fractured furcula.

Optionally an inner longitudinal surface of each of the gripping slats extends parallel to an adjacent one of the converging cutting edges of the wedge shaped blade. This beneficially allows the gripping slats and the wedge shaped blade to converge into a single wedge shape.

Optionally the guide unit includes a pair of side guide tracks opposite another converging in an upstream direction of the guide unit. Providing side guide tracks allows the gripping elements to converge along separate guide tracks. In this way the side guide tracks provide a linear cut along the tissue directly surrounding the furcula while also gripping the furcula. It will be appreciated that when there are no side guide tracks and only a central guide track, the gripping elements may form a pincer.

Optionally the gripping slats can be mounted on the side guide tracks for converging movement towards the cutting element of the knife carrier. This enables the blade and slats to provide gripping of the furcula. This facilitates extraction of the furcula and prevents the contamination of meat with possible bone material.

Optionally the central guide track may comprise at least two parallel guide rods. This prevents the knife carrier or part of the knife carrier from rotating about the central guide track during operations.

Optionally and/or alternatively, the central guide track is arranged for preventing rotation of the knife carrier about the central guide track. For example, the central guide track may include a profile such as one or more recesses or extrusions along the length of central guide track for guiding the knife carrier.

Optionally the side guide tracks may each comprise at least two parallel guide rods. This prevents gripping elements from rotating about the side guide track during operations.

Optionally and/or alternatively, the side guide tracks are arranged for preventing rotation of the gripping elements about the respective side guide tracks. For example, the side guide tracks may include a profile such as one or more recesses or extrusions along the length of side guide track for guiding gripping elements.

Optionally the knife carrier includes a connection rod along which the gripping elements are slidably connected to the cutting element parallel to the plane of conveyance, for joint movement. In this way all cuts are effectuated simultaneously and efficiently. In the event that the furcula is damaged by one of the cuts. As no further cuts need to be performed, the risk of potential spreading of bone fragments is reduced.

Optionally the grappling unit may further also comprise a cleaning member for cleaning the knife carrier when moving from the extended to the retracted position. It will be understood that a knife carrier may carry bone fragments and/or meat from one poultry breast cap to the next if not cleaned properly. In this way the cutting element is scraped clean of such contaminations when retracting.

Optionally the cleaning member can be a wedge shaped block with a slanted surface. It will be understood that the wedge shaped blade retracts behind the cleaning member. It will further be appreciated that the cleaning member fits between the point of convergence and the gripping slats. In this way the cleaning member also provides a clamping surface for clamping poultry tissue between the cleaning element and the gripping slats.

Optionally, the cleaning member is provided with at least one opening for supplying a burst of gas, preferably air, for removing poultry tissue from the cleaning member. This advantageously removes any remaining poultry from the cleaning member. This increases the reliability of the cleaning element and reduces contamination. Preferably, the at least one opening is provided on the slated surface of the cleaning member.

Optionally the knife carrier can be arranged to form an at least partially enclosed volume around the furcula by moving into an extended position. In this way the furcula and surrounding tissue can be stored in the partially enclosed volume when grappled. This effectively provides a barrier between the cut tissue and the poultry breast cap, preventing any contamination of the meat with bone fragments.

Optionally the guide frame can comprise cleaning nozzles for providing burst of water, preferably pressurized water for cleaning the knife carrier. In this way any sticky tissue can be removed from the knife carrier that would otherwise contaminate a subsequent poultry breast cap..

According to a second aspect of the invention a poultry breast filleting system is provided. The poultry breast filleting system includes a furcula remover apparatus according to any embodiment of the first aspect of the invention. The system further includes a conveyor arranged for moving in a conveyor path, and at least one mandrel arranged for carrying a poultry carcass. The at least one mandrel is connected to the conveyor for movement through the conveyor path. The furcula grappling unit is arranged for engagement by one of the mandrel and the conveyor component.

Advantageously such a system can be operated using the furcula remover apparatus in a substantially horizontal plane of conveyance. By operating in a horizontal plane of conveyance the poultry breast caps need not be suspended in an upside down manner prone to gravity. This reduces the complexity of the processing apparatus and subsequent processing stations.

Optionally, the apparatus and system can be arranged such that the carriage and the mandrel remain stationary with respect to each other during the engagement of the furcula grappling unit and at least one of the at least one mandrel and the conveyor component. This advantageously allows the extraction of the furcula independent of the velocity of the mandrel.

Optionally, more than one apparatus, such as two, can be positioned in a conveying path, preferably in series, such that the two, or more, apparatuses can be engaged by alternating mandrels, in the path of conveyance. The apparatus has the benefit of being able to share its workload with a further such apparatus up or downstream of the path of conveyance. As such, a fileting system is capable of handling high-speed mandrel velocities (traveling velocity of a mandrel in its path of conveyance). It will be appreciated that the mandrel speed is limited by at least the physical integrity of the apparatus or the distance between the first and second position of the carriage and the required duration of the extraction.

According to a third aspect of the invention a method is disclosed herein for removing a furcula from at least one poultry breast cap using a furcula remover apparatus according to any first aspect of the invention in a poultry breast fileting system in accordance with any second aspect of the invention. The method further comprises cutting the tendon and tissue surrounding the furcula and removing the furcula from the at least one poultry breast cap. The method may additionally comprise engaging the furcula remover apparatus using a conveyor component, such as a mandrel for co-movement of a carriage and a grappling unit of the furcula remover apparatus with the conveyor component. It will be appreciated that the poultry breast cap containing a furcula is positioned on the mandrel and that the velocity and direction of the mandrel and the conveyor component are the same. The method can be advantageously performed under a variety of mandrel velocities such that furcula extraction is performed.

The invention will further be elucidated by description of some specific embodiments thereof, making reference to the attached drawings. The detailed description provides examples of possible implementations of the invention, but is not to be regarded as describing the only embodiments falling under the scope. The scope of the invention is defined in the claims, and the description is to be regarded as illustrative without being restrictive on the invention. In the drawings:
Figure 1 is an isometric view of a poultry breast fileting system for deboning poultry breast caps;
Figure 2 schematically shows a portion of a conveyor chain as used in the system of Figure 1;
Figure 3 schematically shows a side view of a furcula remover apparatus in a conveying path of the system of Figure 1;
Figure 4 schematically shows a perspective view of the furcula remover apparatus of Figure 3;
Figure 5 schematically shows another perspective view of the furcula remover apparatus of Figures 3 and 4;
Figure 6 schematically shows a bottom view of a furcula grappling unit as used in the furcula remover apparatus of Figures 3 to 5 with a knife carrier in a retracted position;
Figure 7 schematically shows a perspective view from above of the carriage and furcula grappling unit of Figure 6 with a knife carrier in the retracted position;
Figure 8 schematically shows a botom view of of the furcula grappling unit with the knife carrier in its extended position;
Figure 9 schematically shows a perspective view from above of the carriage and furcula grappling unit of Figure 8 with a knife carrier in the retracted position;
Figure 10 schematically shows a side view of the furcula remover apparatus of Figure 3 in a position of making contact with the mandrel;
Figure 11 schematically shows a side view of the furcula remover apparatus of Figure 10 during engagement by the mandrel;
Figure 12 schematically shows a side view of the furcula remover apparatus of Figure 11 after disengagement from the mandrel;
Figure 13 schematically shows a side view of the furcula remover apparatus of Figure 12 during release of a furcula.

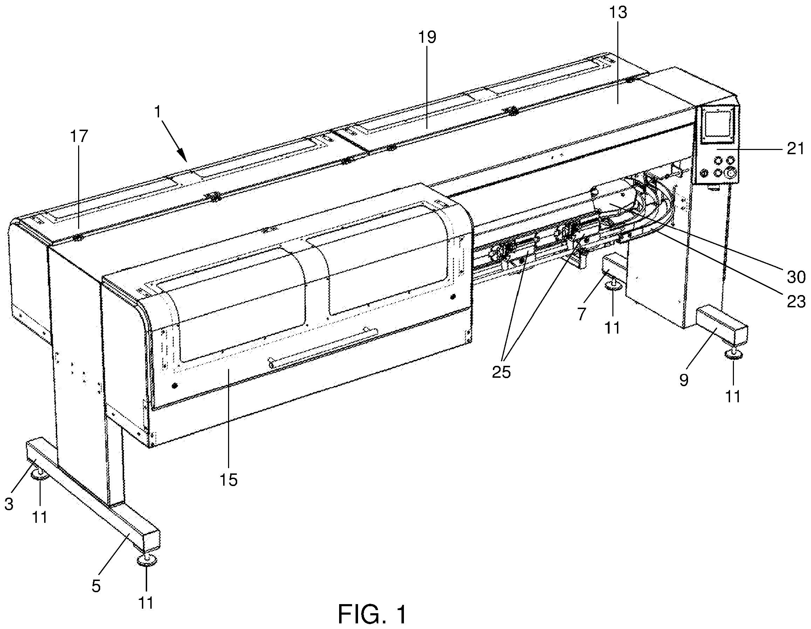

Figure 1 is a perspective view of a system 1 for the automatic deboning of poultry breast caps. The system 1 on opposite ends is provided with legs 3, 5, 7, 9. The legs 3, 5, 7, 9 are each provided with a pedestal 11, at least one of which is adjustable to enable leveling of the system 1 with respect to a workspace floor surface. The system 1 also includes a main body 13 onto which are hinged a front door 15, a first rear door 17, and a second rear door 19. The main body 13 also is provided with a control panel 21. Arranged within the system 1 is an endless conveyor 23 for breast cap carrying mandrels 25. A portion of the conveyor track 23, as shown in Figure 1, is exposed and not covered by a door. This section enables loading of the mandrels 25 with poultry breast caps (not shown, but conventional).

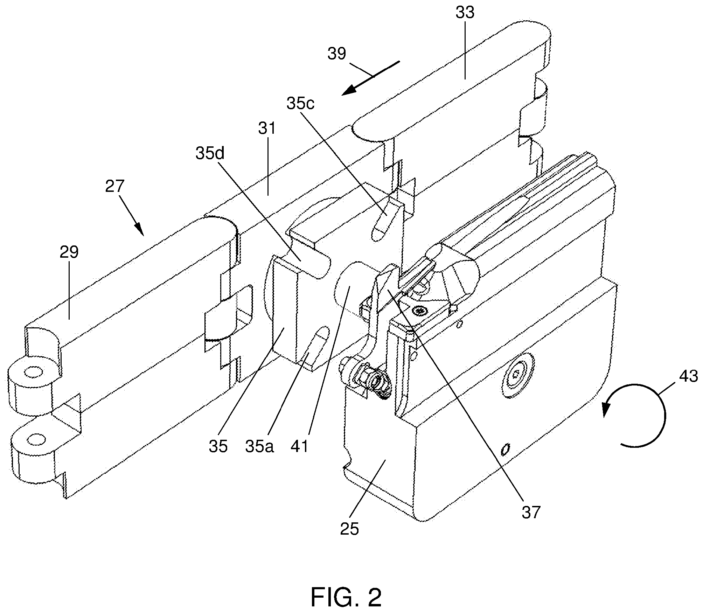

In Figure 2 a portion of a conveyor chain 27 with an associated mandrel 25 is shown on an enlarged scale. Each mandrel 25 has an associated pitch of three individual chain links 29, 31, 33. Intermediate chain link 31 is interposed between leading chain link 29 and trailing chain link 33. A succession of chain links pivotally interconnecting leading chain links 29 to respective trailing chain links 33 forms an endless conveyor chain 27. For movement in the direction of arrow 39 or direction of conveyance the conveyor chain 27 will be engaged by driven wheel 30 (as shown in Figure 1). The intermediate chain link 31 is provided with a bearing for rotatingly supporting Maltese cross 35, which is non-rotatingly connected to the mandrel 25 through a shaft 41. When the Maltese cross 35 is rotated in the direction of arrow 43, the mandrel 25 will rotate with it in the same direction. The Maltese cross 35 is further provided with diagonal, inwardly directed slots 35a, 35b, 35c, 35d, for being engaged by detents (not shown, but conventional) in a guide channel (not shown, but conventional) for rotating the mandrel 25 in the direction of arrow 43. The rotatability of the mandrels allows the system 1 to perform various alternative automatic deboning of poultry breast caps in a single plane of conveyance. As can be seen from Figure 1 the poultry breast caps are transported in the single plane of conveyance. The plane of conveyance here being substantially horizontal and is defined by the path in which the mandrels 25 are transported in Figure 1. The mandrel 25 is further provided with spring-biased clamp 37 for clampingly holding a central bone of a poultry breast cap. In the position of the mandrel 25 as shown in Figure 2 the breast cap meat depends from opposite sides of the mandrel 25, which defines a plane of symmetry that extends perpendicular to the shaft 41. The plane of symmetry of the mandrel 25 thus is kept in a vertical position and a breast cap is supported on the mandrel 25 in a gravity neutral manner. in this way there is no bias on the meat of the breast cap in a lateral direction. The mandrels 25 can be generally of a type as described in U.S. Pat. No. 5,045,024.

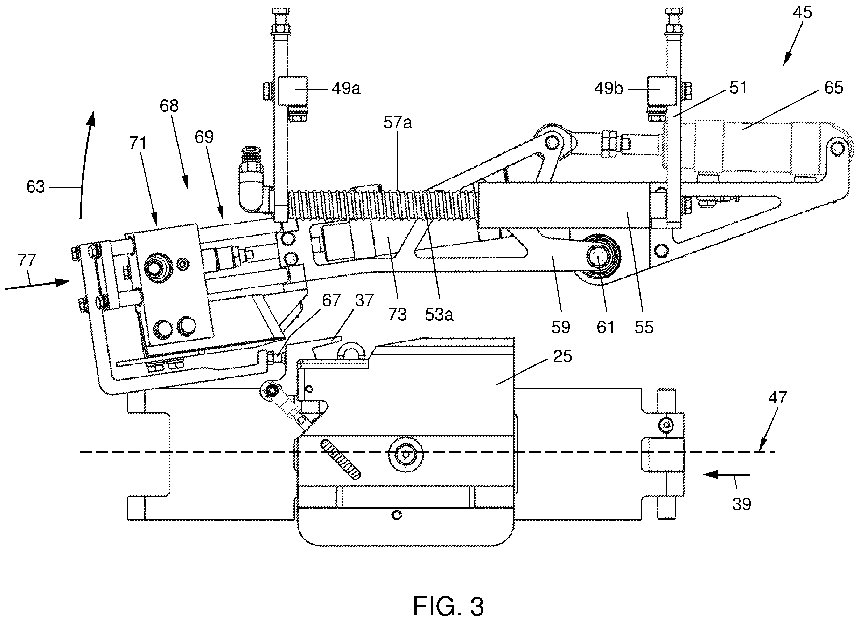

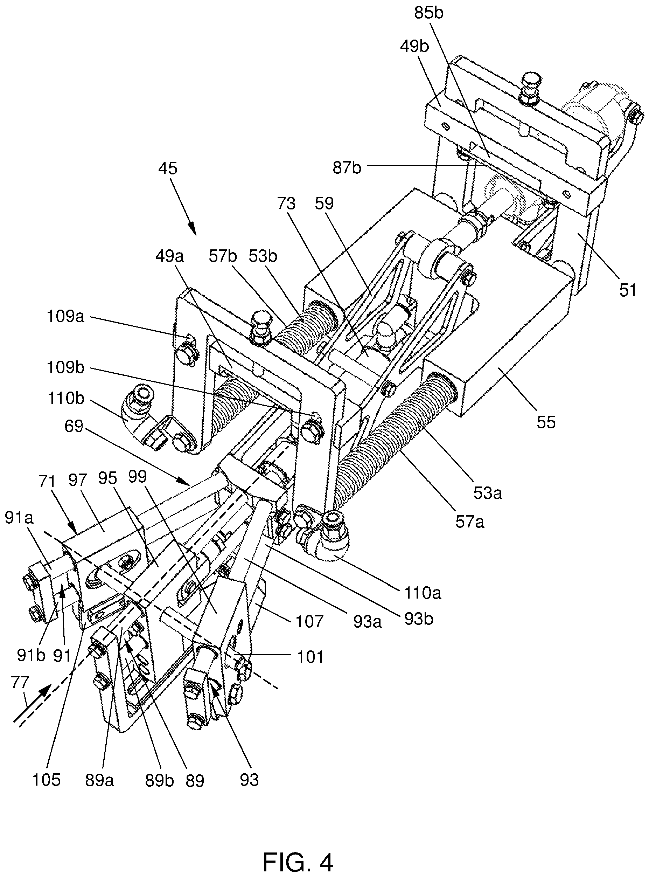

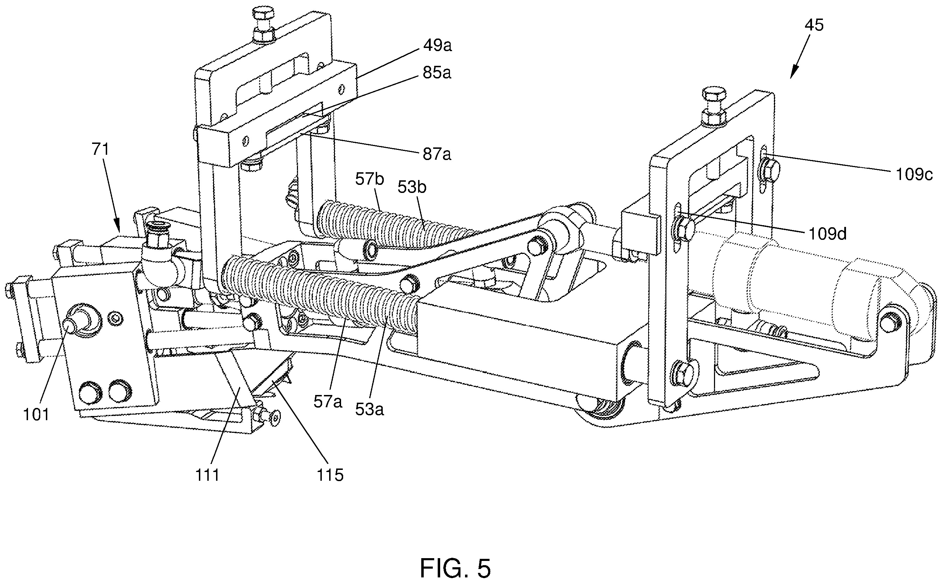

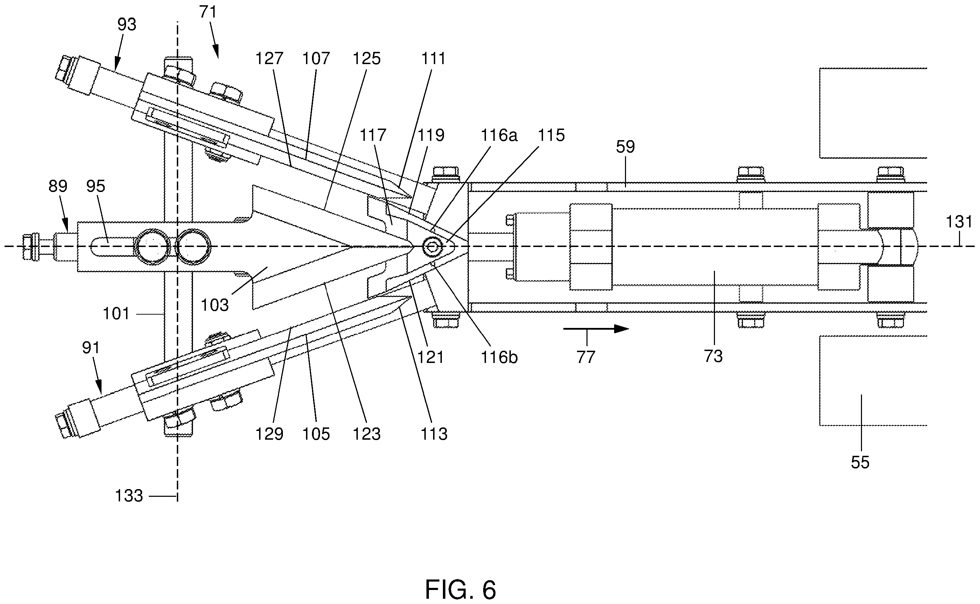

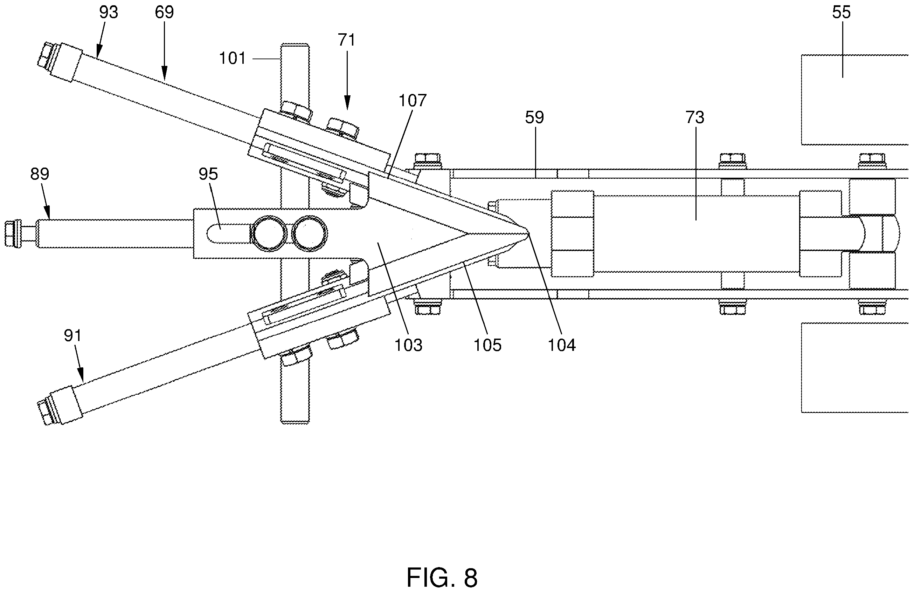

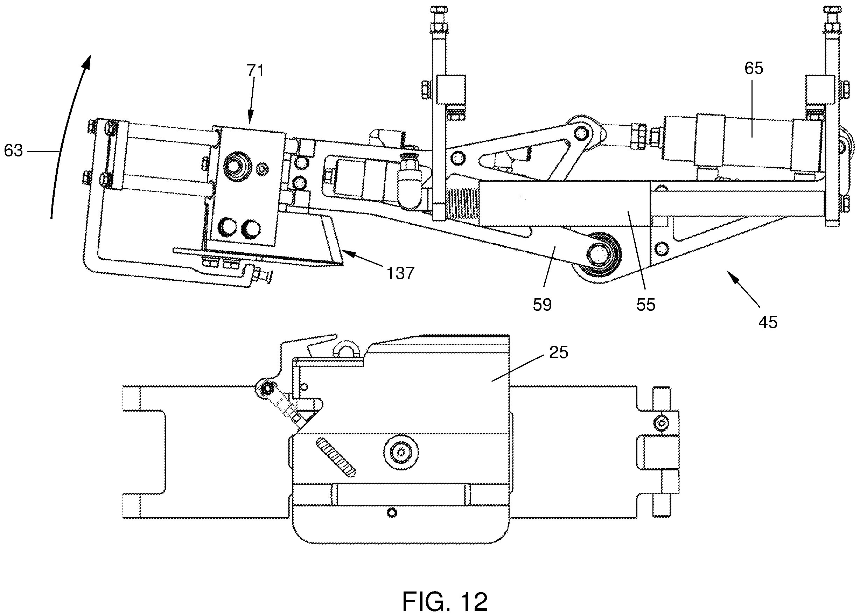

In Figure 3 a furcula remover apparatus 45 is shown in a conveying path 47, also referred to as path of conveyance, of the system 1. The apparatus 45 is attached to the main body 13 of the system 1 via two attachment members 49a, 49b from which a guide frame 51 of the apparatus 45 is suspended. The guide frame 51 is fixed with respect to the main body 13 as to prevent displacement of the apparatus 45. The guide frame 51, as further also sown in Figures 4 and 5, has two spring-loaded guide members 53a, 53b attached to it (53b, shown in Figure 4). A carriage 55 is attached to the guide frame 51 by being slidably mounted on spring-loaded guide members 53a, 53b. The carriage 55 is moveable between a first position upstream of the direction of conveyance 39 and a second position downstream of the direction of conveyance 39. The spring-loaded guide members 53a, 53b are further each provided with a helically wound spring 57a, 57b (57b, shown in Figure 4) around each guide member 53a, 53b respectively, providing a resilient bias, for biasing the carriage 55 into the first position thereof. The carriage 55 is provided with a furcula grappling unit 59 which is pivotally connected to the carriage 55 by a pivoting shaft 61. The furcula grappling unit 59 is arranged for pivoting between an extended position, towards the conveying path 47 (as shown in Figure 3), and a retracted position, away from the conveying path 47 (as shown in Figure 12). Arrow 63 indicates the direction of a motion of retraction of the furcula grappling unit 59, which is perpendicular to the direction of conveyance 39 and perpendicular to the plane of conveyance. The extending motion is opposite the direction of arrow 63. The furcula grappling unit 59 is further also connected to the carriage 55 by a first linear actuator 65 provided as a pneumatic cylinder for actuating the retraction and extension of the furcula grappling unit 59. The furcula grappling unit 59 is further provided with a guide unit 69 on a downstream end 68 of the furcula grappling unit 59. The furcula grappling unit 59 is further also provided with an abutment member 67 which is attached to the guide unit 69. The abutment member 67 is a rubber block that is positioned for receiving the spring-biased clamp 37 of the mandrel 25. A knife carrier 71 is slidably connected to the guide unit 69 for movement between a retracted position, as shown in Figure 6, and an extended position, as shown in Figure 8, for grappling the poultry breast cap (not shown, but conventional) carried by the mandrel 25. The extended position is obtained by sliding the knife carrier 71 along the guide unit 69 in the direction of arrow 77 The guide unit 69 and knife carrier 71 will be explained in detail further below. The furcula grappling unit 59 further includes a second linear actuator 73 which is connected to the knife carrier 71 for sliding the knife carrier 71 along the guide unit 69. The second linear actuator 73 is also a pneumatic cylinder. The furcula grappling unit 59 is engaged by the mandrel 25 via engagement of the abutment member 67 by the spring-biased clamp 37 of the mandrel 25 pushing the furcula grappling unit 59 in the direction of conveyance 39. The engagement of the furcula grappling unit 59 results in a co-motion of the carriage 55 and the furcula grappling unit 59 in the direction of conveyance 39.

In Figure 4 the furcula remover apparatus 45 of Figure 3 is shown in a perspective view. The attachment members 49a, 49b are each provided with an attachment opening 85a, 85b (85a, shown in Figure 5) respectively for allowing a component of the main body 13 there through to be fastened by screw fastening. The main body 13 is clamped between the attachment members 49a, 49b and latches 87a, 87b (87a, shown in Figure 5) respectively. The attachment openings 85a, 85b further allows the furcula remover apparatus 45 to be placed or relocated along the path of conveyance 47 as desired. The guide unit 69 has a central guide track 89 and a pair of side guide tracks 91, 93 opposite another converging in an upstream direction of the guide of the guide unit or in the direction of arrow 77. The knife carrier 71 consists of a cutting element 95 slidably connected to the central guide track 89 and a pair of gripping elements 97, 99 slidably connected to the side guide tracks 91, 93 respectively. The cutting element 95 and the gripping elements 97, 99 are slidably connected along a connection rod 101 for movement along the connection rod 101 for moving along with the cutting element 95 in the direction of arrow 77. The second linear actuator 73 is attached to the cutting element 95 of the knife carrier 71 for actuating the knife carrier 71 via the cutting element 95. The cutting element 95 contains a wedge shaped blade 103 (shown in Figure 6) and the gripping elements 97, 99 contain gripping slats 105, 107 respectively. The knife carrier as presented in Figure 4 is in the retracted position. The guide frame 51 is further also fitted with cleaning nozzles 110a, 110b directed at the knife carrier 71 and guide unit 69 for delivering bursts of pressurized water to the knife carrier 71 for cleaning the knife carrier 71.

In Figure 5 it can be seen that the spring-loaded guide members 53a, 53b are parallel to each other and attached to opposite sides of the guide frame 51. The guide frame is equipped with guide channels 109a, 109b as seen from Figure 4 and guide channels 109c, 109d as seen from Figure 5, for determining a fastening position for the attachment members 49a,49b and for allowing the relocation of apparatus 45 over the path of conveyance 47. The gripping slats 105, 107 each have mutually abuttable cutting edges 111, 113 (113 shown in Figure 6). A cleaning member 115 is provided as a wedge shaped polymer block with a triangular slanted surface, which is further provided with two openings 116A, 116B (as shown in Figure 5) each arranged for supplying a burst of air for removing poultry tissue from the cleaning member. The cleaning member 115 is attached to the furcula grappling unit 59 for cleaning the mutually abuttable cutting edges 111, 113 of the gripping slats 105, 107 when the knife carrier 71 is in the retracted position. The cleaning member 115 is shaped to allow the wedge shaped blade 103 of the cutting member 95 to move past the cleaning member 115 over a bottom edge 117 of the cleaning member 115. The retracting motion of the wedge shaped blade 103 over the bottom edge 117 of the cleaning member 115 provides a scraping motion for removing poultry tissue from the wedge shaped blade 103. The cleaning member 115 is shaped to allow the gripping slats 111, 113 to move past the cleaning member 115 over side edges 119, 121 respectively. The cleaning member 115 also allows for gripping of poultry tissue between the cleaning member 115 and the gripping slats 111, 113 as will be explained further below.

In Figure 6 a bottom view the furcula grappling unit 59 as used in the furcula remover apparatus 45 of Figures 3 to 5 can be seen with the knife carrier 71 in a retracted position. The abutment member 67 is not shown in this Figure, but is part of the furcula grappling unit 59. The wedge shaped blade 103 has converging cutting edges 123, 125. The inner longitudinal surfaces 127, 129 of each of the gripping slats 105, 107 respectively extend parallel to the adjacently converging cutting edges 123, 125 of the wedge shaped blade 103. The side guide tracks 91, 93 are sharply angled to converge in the upstream direction of the guide unit 69 or arrow 77. The central guide track 89 and the second linear actuator 73 run parallel to axis 131. The second linear actuator 73 is arranged for generating a linear motion of the cutting element 95 along the central guide track 89 when actuated. The side guide tracks 91, 93 are angled 20 degrees from axis 131. All motion along the central guide track 89 and the side guide tracks 91, 93 is parallel to a plane of operations which is defined by axis 131 and axis 133. Axis 133 being defined by the connection rod 101 perpendicular to axis 131.

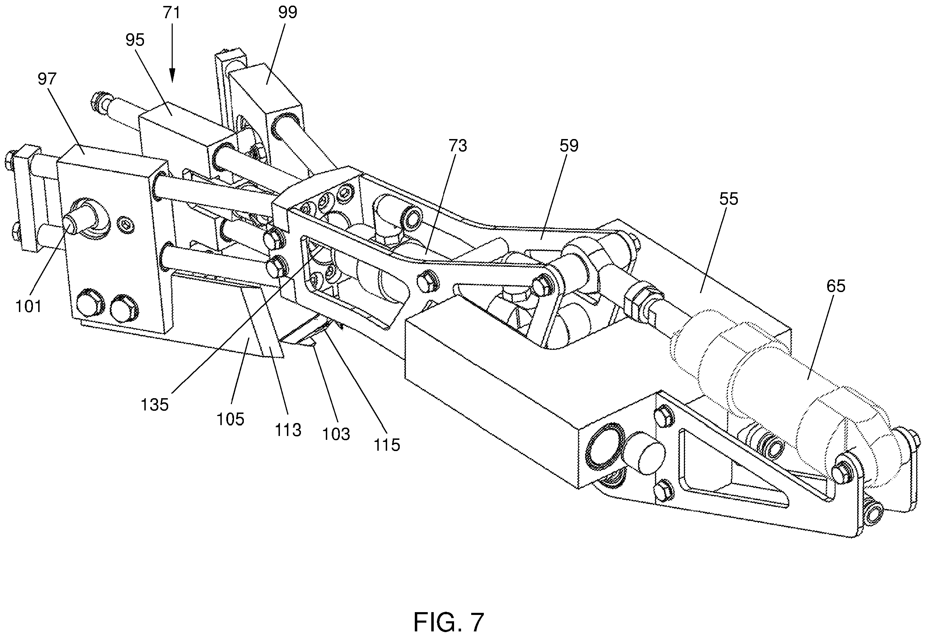

In Figure 7 a perspective view of the furcula grappling unit 59 with carriage 55 is shown having the knife carrier 71 in the extended position. Here the cutting element 95 is further seen to be attached second linear actuator 73 via a piston rod 135. The connection rod 101 is fixed to the cutting element 95 of the knife carrier 71. As a result the wedge shaped blade 103 remains stationary with respect to the connection rod 101.

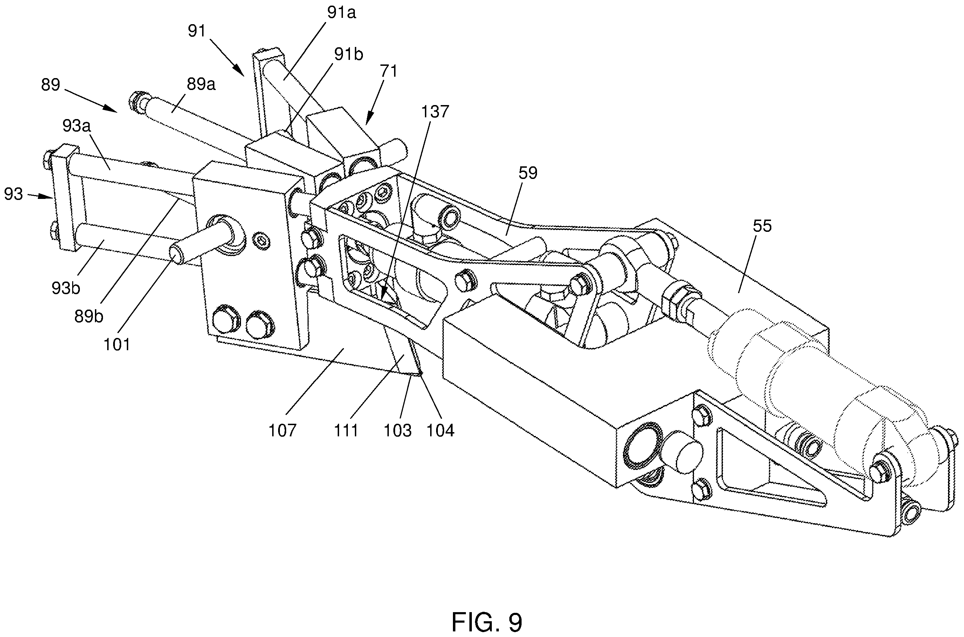

In Figure 8 a bottom view of the furcula grappling unit 59 of Figure 6 and 7 is schematically shown with the knife carrier 71 in the extended position. In the extended position the gripping slats have converged to the a front tip 104 of the wedge shaped blade 103 which represents a common meeting point. Also the gripping slats 105, 107 have moved towards the side edges 119, 121 of the cleaning member 115 respectively. The movement of the gripping slats 105, 107 towards the cleaning member 115 is a gripping or clamping motion which allows the gripping or clamping of poultry tissue (not shown, but conventional) in between the gripping slats 105, 107 and the side edges 119, 121 of the cleaning member 115. The wedge shaped blade 103 is sufficiently sharp to cut through tendon tissue attached to the furcula (non-show, but conventional). The wedge shaped blade 103 is further capable of wedging the furcula into a position for gripping by the gripping slats 105, 107. In the extended position of the knife carrier 71 the furcula of the poultry breast cap is firmly held in an enclosed volume 137 (shown in Figure 9). The inner longitudinal surfaces 127, 129 of each of the gripping slats 105, 107 enclose the volume 137 together with the wedge shaped blade and the cleaning member 115. In the enclosed volume 137 a part of the poultry breast cap which has been cut off by the wedge shaped blade 103 is contained and held in place by the gripping slats 105, 107.

In Figure 9 a perspective view of a furcula grappling unit 59 with carriage 55 is shown with the knife carrier 71 in the extended position. The central guide track 89 consists of two parallel guide rods 89a, 89b securing the cutting element 95 against rotation along the central guide track 89. The side guide tracks 91, 93 each consist of parallel guide rods 91a, 91b and parallel guide rods 93a, 93b respectively, preventing the rotation of the gripping elements 97, 99 (shown in Figure 4) about the side guide tracks 91, 93.

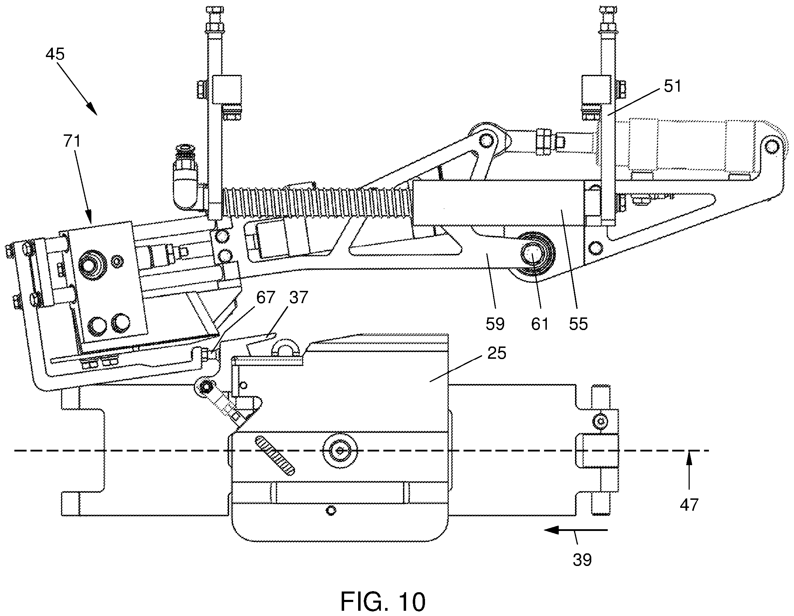

Figures 10-13 describe the relative motions of the carriage 55, the furcula grappling unit 59 and the knife carrier 71 of the furcula remover apparatus 45 in a process of extracting the furcula from a poultry breast cap (not shown, but conventional) carried by the mandrel 25. Figures 10-13 follow each other chronologically in the process of extracting the furcula.

Figure 10 schematically shows a side view of the furcula remover apparatus 45 of Figure 3. The furcula remover apparatus makes contact with the mandrel 25 prior to engagement. Prior to engagement the carriage 55 is in the first position and the furcula grappling unit 45 is in the extended position. The knife carrier 71 is in the retracted position, as described in Figures 6 and 7. The abutment member 67 is attached to the furcula grappling unit 45. In order to engage the carriage 55 the spring-biased clamp 37 of the mandrel 25 impacts with the abutment member 67 and transfers kinetic energy from the mandrel 25 to the furcula grappling unit 45. Further movement of the mandrel 25, as shown in Figure 10, in the direction of conveyance 39 will result in the carriage 55 and the mandrel 25 becoming stationary in relation to each other. Prior to engagement by the mandrel 25, the carriage 55 is also stationary with respect to the guide frame 51.

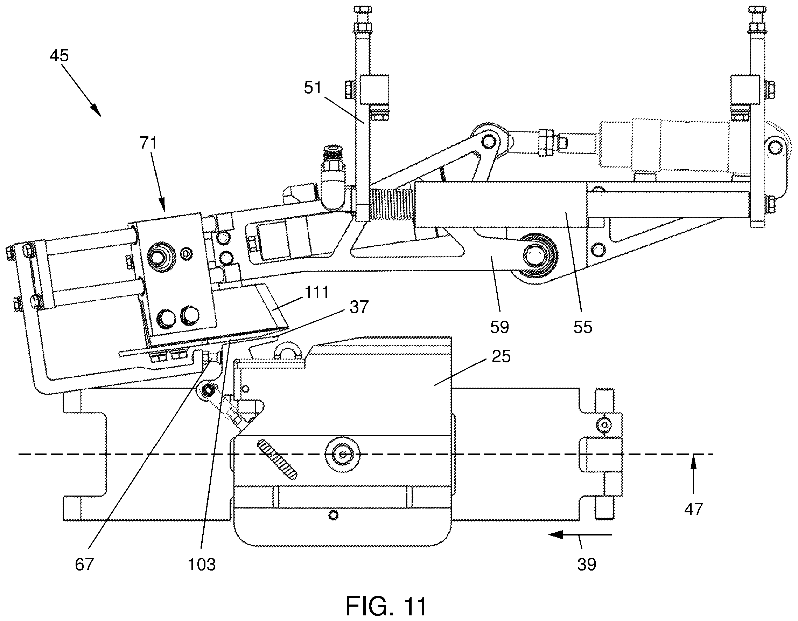

In Figure 11 a side view of the furcula remover apparatus 45 of Figure 10 is shown during engagement by the mandrel 25. The carriage 55 can be seen to have moved from the first position as shown in Figure 10 to the second position. The furcula grappling unit 45 can be seen to remain in the extended position in which the abutment member 67 remains in contact with the spring-biased clamp 37 of the mandrel 25. The knife carrier 71 can be seen to have moved from the retracted position, as shown in Figures 6 and 7, to the extended position, as shown in Figures 8 and 9. In the extended position of the knife carrier 71, the knife carrier 71 has already cut the tendon tissue attached to the furcula of the poultry breast cap (not shown but conventional). The gripping slats 105, 107 have converged towards each other and will be understood to have gripped and cut out the furcula with the mutually abuttable cutting edges 111, 113 together with the wedge shaped blade 103.

In Figure 12 a side view of the furcula remover apparatus 45 of Figure 11 is shown after disengagement from the mandrel 25. The furcula grappling unit 59 can be seen to have pivoted in the direction of arrow 63 from its previous extended position to its retracted position. In the retracted position the grappling unit 59 is moved away from the path of conveyance 39 clear of the poultry breast cap (not shown, but conventional) mounted on the mandrel 25. The first linear actuator 65 here is seen forcing the furcula grappling unit 59 into the retracted position. The furcula and attached tissue (not shown, but conventional) are inside the enclosed volume 137 and have been removed from the poultry breast cap (not shown, but conventional) by the retraction of the furcula grappling unit 59. The motion of the furcula grappling unit 59 from extended to retracted provides a pulling motion on the furcula and any still attached tissue from the poultry breast cap resulting in the extraction of the furcula. During the retraction of the furcular grappling unit the knife carrier 71 remains in the extended position.

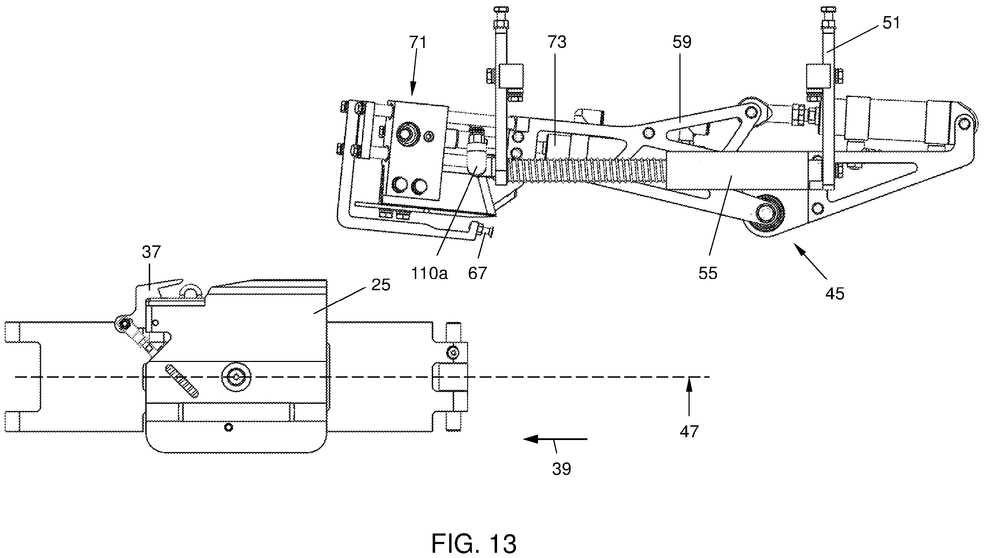

In Figure 13 a side view of the furcula remover apparatus 45 of Figure 12 is shown. The carrier 55 here has returned from the second position downstream of the direction of conveyance 39 to the first position upstream of the direction of conveyance 39. The knife carrier 71 has further moved from the extended position to the retracted position thereof. The knife carrier 71 has been moved into the retracted position thereof using the second linear actuator 73. In the retracted position the now extracted furcula (not shown, but conventional) is released. The release of the furcula occurs as shown when the mandrel 25 has passed further along the path of conveyance 47 in the direction of conveyance 39. The motion of the wedge shaped blade 103 along the cleaning member 115 scrapes attached tissue off the blade 103. Additionally, water is injected through the knife carrier 71 using the cleaning nozzles 110a, 110b forcing remaining poultry tissue off of the knife carrier 71. In order to ready the furcula grappling apparatus 45 for a next poultry breast cap, the furcula grappling unit 59 is extended. Extending the furcula grappling unit 59 returns the furcula remover apparatus 45 to conditions shown in Figure 10.

## Claims

1. A furcula remover apparatus (45), for a poultry breast fileting system (1), comprising:
a guide frame (51) for attachment to a main body (13) of a poultry breast fileting system (1) in a conveying path (47) thereof in a plane of conveyance;
a carriage (55) slidably mounted to the guide frame (51) for movement with respect to the guide frame (51) between a first position upstream of a direction of conveyance (39), and a second position downstream of the direction of conveyance (39);
a furcula grappling unit (59) moveably connected to the carriage (55) for movement in a direction perpendicular to the plane of conveyance between a retracted and an extended position, the furcula grappling unit (59) comprising a guide unit (69) on a downstream end thereof; and
a knife carrier (71) slidably connected to the guide unit (69), for movement between a retracted and extended position, for grappling a furcula of a poultry carcass when extended;
wherein the furcula grappling unit (59), when in use and the guide frame (51) attached to a poultry breast fileting system (1), is arranged for being engaged by one of a mandrel (25) or a conveyor component of a poultry fileting system for movement from the first position to the second position,
wherein the carriage (55) is resiliently biased into the first position, for receiving the poultry carcass, and arranged for translatory movement from the first position to the second position in the direction of conveyance against the resilient bias when engaged, and from the second position to the first position in a direction opposite the direction of conveyance.

2. The apparatus according to claim 1, wherein the carriage (55) comprises a first, e.g. pneumatic, linear actuator (65) connected to the grappling unit (59) for moving the grappling unit (59) between the retracted and the extended positions.

3. The apparatus (45) according to any of the preceding claims 1-2, wherein the carriage (55) comprises a second, e.g. pneumatic, linear actuator (73) connected to the knife carrier (71) for sliding the knife carrier (59) along the guide unit (69) for grappling of the furcula.

4. The apparatus (45) according to any of the preceding claims 1-3, wherein the carriage (55) is resiliently biased into the first position by at least one of a spring-loaded bias, such as generated by at least one helically wound spring, a pneumatical bias, a magnetic bias, electrical bias, and a force bias.

5. The apparatus (45) according to any of the preceding claims 1-4, wherein the furcula grappling unit (59) is pivotally connected to the carriage (55).

6. The apparatus (45) according to any of the preceding claims 1-5, wherein the carriage (55) is arranged for engagement via the furcula grappling unit (59).

7. The apparatus (45) according to any of the preceding claims 1-6, wherein the guide unit (69) comprises at least a central guide track (89), e.g. comprising at least two parallel guide rods (89a, 89b).

8. The apparatus (45) according to any of the preceding claims 1-7, wherein the knife carrier (71) comprises a cutting element (95) for cutting tendon tissue attached to the furcula, wherein optionally the cutting element (95) comprises a wedge shaped blade (103) having converging cutting edges (123, 125), and/or wherein optionally the cutting element (95) is mounted on the central guide track (89).

9. The apparatus (45) according to any of the preceding claims 1-8, wherein the knife carrier (71) comprises a pair of gripping elements (97, 99), wherein each gripping element (97, 99) comprises a gripping slat (105, 107), wherein optionally the gripping slats (105, 107) have gripping edges converging to one another, wherein the converging gripping edges optionally comprise mutually abuttable cutting edges (111, 113), wherein optionally an inner longitudinal surface (127, 129) of each of the gripping slats (105, 107) extends parallel to an adjacent one of the converging cutting edges (123, 125) of the wedge shaped blade (103), wherein optionally the knife carrier (71) comprises a connection rod (101) along which the gripping elements (97, 99) are slidably connected to the cutting element (95) parallel to the plane of conveyance, for joint movement.

10. The apparatus (45) according to any of the preceding claims 1-9, wherein the guide unit (69) comprises a pair of side guide tracks (91, 93), e.g. each comprise at least two parallel guide rods (91a, 91b, 93a, 93b), opposite another converging in an upstream direction of the guide unit (69), wherein optionally the gripping slats (105, 107) are mounted on the side guide tracks (91, 93) for converging movement towards the cutting element (95) of the knife carrier (71), wherein optionally the cutting element (95) and the gripping elements (97, 99) are arranged to converge into a common meeting point.

11. An apparatus (45) according to any of the preceding claims 1-10, wherein the grappling unit (59) comprises a cleaning member (115) for cleaning the knife carrier when moving from the extended to the retracted position, wherein the cleaning member (115) optionally is a wedge shaped block with a slanted surface, and/or wherein optionally the cleaning member is provided with at least one opening for supplying a burst of gas, preferably air, for removing poultry tissue from the cleaning member

12. An apparatus (45) according to any of the preceding claims 1-11, wherein the knife carrier (71) is arranged to form an at least partially enclosed volume (137) around the furcula by moving into an extended position.

13. An apparatus (45) according to any of the preceding claims 1-12, wherein the guide frame (51) comprises cleaning nozzles (110a, 110b) for providing burst of water for cleaning the knife carrier (71).

14. A poultry breast filleting system (1) including:
the furcula remover (45) apparatus of one of claims 1-13;
a conveyor (23) arranged for moving in a conveyor path (47), and
at least one mandrel (25) arranged for carrying a poultry carcass, the at least one mandrel (25) being connected to the conveyor (23) for movement through the conveyor path (47),
wherein the furcula grappling unit (59) is arranged for engagement by one of the mandrel (25) and the conveyor component.

15. A method for removing a furcula from at least one poultry breast cap using a furcula remover apparatus (45) of one of claims 1-13 in a poultry breast fileting system (1) of claim 14, comprising:
cutting the tendon and tissue surrounding the furcula; and
removing the furcula from the at least one poultry breast cap.

## Patentansprüche

1. Vorrichtung (45) zum Entfernen des Gabelbeins für ein Geflügelbrustfiletiersystem (1), umfassend:
einen Führungsrahmen (51) zum Anbringen an einem Hauptkörper (13) eines Geflügelbrustfiletiersystems (1) in einer Förderbahn (47) davon in einer Förderebene;
einen am Führungsrahmen (51) verschiebbar montierten Schlitten (55) zur Bewegung in Bezug auf den Führungsrahmen (51) zwischen einer in Förderrichtung (39) vorgelagerten ersten Position und einer in Förderrichtung (39) nachgelagerten zweiten Position;
eine Gabelbeingreifeinheit (59), die mit dem Schlitten (55) für eine Bewegung in einer Richtung senkrecht zur Förderebene zwischen einer eingefahrenen und einer ausgefahrenen Position bewegbar verbunden ist, wobei die Gabelbeingreifeinheit (59) eine Führungseinheit (69) an einem nachgelagerten Ende davon aufweist; und
einen Messerträger (71), der mit der Führungseinheit (69) für eine Bewegung zwischen einer eingefahrenen und einer ausgefahrenen Position verschiebbar verbunden ist, um im ausgefahrenen Zustand ein Gabelbein eines Geflügelschlachtkörpers zu greifen;
wobei die Gabelbeingreifeinheit (59), wenn sie im Gebrauch ist und der Führungsrahmen (51) an einem Geflügelbrustfiletiersystem (1) angebracht ist, so ausgebildet ist, dass sie zum Bewegen von der ersten Position in die zweite Position von einem Dorn (25) oder einer Förderkomponente eines Geflügelfiletiersystems in Eingriff genommen wird,
wobei der Schlitten (55) elastisch in die erste Position vorgespannt ist, um den Geflügelschlachtkörper aufzunehmen, und ausgebildet ist für eine Verschiebungsbewegung von der ersten Position in die zweite Position in Förderrichtung gegen die elastische Vorspannung, wenn im Eingriff befindlich, und von der zweiten Position in eine Richtung entgegen der Förderrichtung in die erste Position.

2. Vorrichtung nach Anspruch 1, wobei der Schlitten (55) einen ersten, z. B. pneumatischen, linearen Aktuator (65), verbunden mit der Greifeinheit (59) zum Bewegen der Greifeinheit (59) zwischen der eingefahrenen und der ausgefahrenen Position, umfasst.

3. Vorrichtung (45) nach einem der vorstehenden Ansprüche 1-2, wobei der Schlitten (55) einen zweiten, z. B. pneumatischen, linearen Aktuator (73)aufweist, der mit dem Messerträger (71) verbunden ist zum Verschieben des Messerträgers (59) entlang der Führungseinheit (69) zum Greifen des Gabelbeins.

4. Vorrichtung (45) nach einem der vorstehenden Ansprüche 1-3, wobei der Schlitten (55) durch mindestens eine von einer federbelasteten Vorspannung, wie sie von mindestens einer spiralförmig gewickelten Feder erzeugt wird, einer pneumatischen Vorspannung, einer magnetischen Vorspannung, einer elektrischen Vorspannung und einer Kraftvorspannung, elastisch in die erste Position verspannt ist.

5. Vorrichtung (45) nach einem der vorstehenden Ansprüche 1-4, wobei die Gabelbeingreifeinheit (59) schwenkbar mit dem Schlitten (55) verbunden ist.

6. Vorrichtung (45) nach einem der vorstehenden Ansprüche 1-5, wobei der Schlitten (55) für ein Eingreifen über die Gabelbeingreifeinheit (59) angeordnet ist.

7. Vorrichtung (45) nach einem der vorstehenden Ansprüche 1-6, wobei die Führungseinheit (69) mindestens eine zentrale Führungsschiene (89) umfasst, z. B. umfassend mindestens zwei parallele Führungsstangen (89a, 89b).

8. Vorrichtung (45) nach einem der vorstehenden Ansprüche 1-7, wobei der Messerträger (71) ein Schneidelement (95) zum Schneiden von Sehnengewebe umfasst, das an dem Gabelbein angebracht ist, wobei das Schneidelement (95) optional eine keilförmige Klinge (103) mit konvergierenden Schneidkanten (123, 125) umfasst, und/oder wobei das Schneidelement (95) optional auf der zentralen Führungsschiene (89) montiert ist.

9. Vorrichtung (45) nach einem der vorstehenden Ansprüche 1-8, wobei der Messerträger (71) ein Paar Greifelemente (97, 99) umfasst, wobei jedes Greifelement (97, 99) eine Greiflamelle (105, 107) umfasst, wobei die Greiflamellen (105, 107) optional zueinander konvergierende Greifkanten aufweisen, wobei die zueinander konvergierenden Greifkanten optional wechselseitig angrenzbare Schneidkanten (111, 113) umfassen, wobei sich optional eine innere Längsfläche (127, 129) jeder der Greiflamellen (105, 107) parallel zu einer benachbarten der zueinander konvergierenden Schneidkanten (123, 125) der keilförmigen Klinge (103) erstreckt, wobei der Messerträger (71) optional eine Verbindungsstange (101) umfasst, entlang der die Greifelemente (97, 99) parallel zur Förderebene für eine gemeinsame Bewegung verschiebbar mit dem Schneidelement (95) verbunden sind.

10. Vorrichtung (45) nach einem der vorstehenden Ansprüche 1-9, wobei die Führungseinheit (69) ein Paar Seitenführungsschienen (91, 93) umfasst, die z. B. jeweils mindestens zwei parallele Führungsstangen (91a, 91b, 93a, 93b) umfassen, die einander gegenüber in einer der Führungseinheit (69) vorgelagerten Richtung zueinander konvergieren, wobei optional die Greiflamellen (105, 107) an den seitlichen Führungsschienen (91, 93) zur konvergierenden Bewegung in Richtung des Schneidelements (95) des Messerträgers (71) montiert sind, wobei optional das Schneidelement (95) und die Greifelemente (97, 99) dazu angeordnet sind, in einen gemeinsamen Treffpunkt zu konvergieren.

11. Vorrichtung (45) nach einem der vorstehenden Ansprüche 1-10, wobei die Greifeinheit (59) ein Reinigungselement (115) zum Reinigen des Messerträgers beim Bewegen von der ausgefahrenen in die eingefahrene Position umfasst, wobei das Reinigungselement (115) optional ein keilförmiger Block mit einer abgeschrägten Oberfläche ist, und/oder wobei das Reinigungselement optional mit mindestens einer Öffnung zum Zuführen eines Gasstoßes, vorzugsweise Luft, zum Entfernen von Geflügelgewebe aus dem Reinigungselement versehen ist.

12. Vorrichtung (45) nach einem der vorstehenden Ansprüche 1-11, wobei der Messerträger (71) so angeordnet ist, dass er ein wenigstens teilweise eingeschlossenes Volumen (137) um das Gabelbein herum bildet, indem er sich in eine ausgefahrene Position bewegt.

13. Vorrichtung (45) nach einem der vorstehenden Ansprüche 1-12, wobei der Führungsrahmen (51) Reinigungsdüsen (110a, 110b) zum Bereitstellen eines Wasserstoßes zum Reinigen des Messerträgers (71) umfasst.

14. Geflügelbrustfiletiersystem (1), einschließend:
die Gabelbeinentfernungsvorrichtung (45) nach einem der Ansprüche 1-13;
einen Förderer (23), angeordnet zum Bewegen in einer Förderbahn (47), und
mindestens einen Dorn (25), angeordnet zum Tragen eines Geflügelschlachtkörpers, wobei der mindestens eine Dorn (25) mit dem Förderer (23) zur Bewegung durch die Förderbahn (47) verbunden ist,
wobei die Gabelbein-Greifeinheit (59) zum Eingreifen durch
einen der Dorne (25) und die Fördererkomponente angeordnet ist.

15. Verfahren zum Entfernen eines Gabelbeins von mindestens einer Geflügelbrustkappe unter Verwendung einer Gabelbeinentfernungsvorrichtung (45) nach einem der Ansprüche 1-13 in einem Geflügelbrustfiletiersystem (1) nach Anspruch 14, umfassend:
Schneiden der Sehne und des Gewebes um das Gabelbein; und
Entfernen des Gabelbeins von der mindestens einen Geflügelbrustkappe.

## Revendications

1. Un appareil permettant d'enlever la furcula ou fourchette (45), pour un système de filetage de poitrine de volaille (1), comprenant :
un cadre de guidage (51) destiné à être fixé à un corps principal (13) d'un système de filetage de poitrine de volaille (1) dans un chemin de transport (47) de celui-ci dans un plan de transport ;
un chariot (55) monté coulissant sur le cadre de guidage (51) pour un déplacement par rapport au cadre de guidage (51) entre une première position en amont d'une direction de transport (39) et une deuxième position en aval de la direction de transport ( 39);
une unité formant grappin de furcula (59) reliée de manière mobile au chariot (55) pour un mouvement dans une direction perpendiculaire au plan de transport entre une position rétractée et une position étendue, l'unité formant grappin de furcula (59) comprenant une unité de guidage (69) sur une extrémité aval de celle-ci ; et
un porte-couteau (71) relié de manière coulissante à l'unité de guidage (69), pour mouvement entre une position rétractée et étendue, pour saisir une furcula d'une carcasse de volaille lorsqu'elle est étendue ;
dans lequel l'unité formant grappin de furcula (59), lorsqu'elle est utilisée et le cadre de guidage (51) fixé à un système de filetage de poitrine de volaille (1), est agencé pour être engagé par l'un parmi un mandrin (25) ou un composant de convoyeur d'un système de filetage de poitrine de volaille pour assurer un déplacement de la première position à la deuxième position,
dans lequel le chariot (55) est sollicité de manière élastique dans la première position, pour recevoir la carcasse de volaille, et conçu pour un mouvement de translation depuis la première position vers la deuxième position dans la direction de transport contre la sollicitation élastique lorsqu'il est engagé, et de la deuxième position à la première position dans une direction opposée à la direction de transport.

2. L'appareil selon la revendication 1, dans lequel le chariot (55) comprend un premier actionneur linéaire par ex. pneumatique (65) relié à l'unité formant grappin (59) pour déplacer l'unité formant grappin (59) entre les positions rétractée et étendue.

3. L'appareil (45) selon l'une quelconque des revendications précédentes 1 et 2, dans lequel le chariot (55) comprend un deuxième actionneur linéaire par ex. pneumatique (73) relié au porte-couteau (71) pour faire glisser le porte-couteau (59) le long de l'unité de guidage (69) pour saisir la furcula.

4. L'appareil (45) selon l'une quelconque des revendications précédentes 1 à 3, dans lequel le chariot (55) est sollicité de manière élastique dans la première position par au moins un parmi une sollicitation à ressort, telle que générée par au moins un ressort hélicoïdale enroulé, une sollicitation pneumatique, une sollicitation magnétique, une sollicitation électrique et une sollicitation de force.

5. L'appareil (45) selon l'une quelconque des revendications précédentes 1 à 4, dans lequel l'unité formant grappin de furcula (59) est reliée de manière pivotante au chariot (55).

6. L'appareil (45) selon l'une quelconque des revendications précédentes 1 à 5, dans lequel le chariot (55) est agencé pour s'engager via l'unité formant grappin de furcula (59).

7. L'appareil (45) selon l'une quelconque des revendications précédentes 1 à 6, dans lequel l'unité de guidage (69) comprend au moins une piste de guidage centrale (89), par ex. comprenant au moins deux tiges de guidage parallèles (89a, 89b).

8. L'appareil (45) selon l'une quelconque des revendications précédentes 1 à 7, dans lequel le porte-couteau (71) comprend un élément coupant (95) pour couper le tissu tendineux fixé à la furcula, dans lequel facultativement l'élément coupant (95) comprend une lame en forme de coin (103) ayant des bords coupants convergents (123, 125), et/ou dans lequel éventuellement l'élément coupant (95) est monté sur la piste de guidage centrale (89).

9. L'appareil (45) selon l'une quelconque des revendications précédentes 1 à 8, dans lequel le porte-couteau (71) comprend une paire d'éléments de préhension (97, 99), dans lequel chaque élément de préhension (97, 99) comprend une latte de préhension (105, 107), dans lequel les lattes de préhension présentent éventuellement des bords de préhension convergeant les uns vers les autres, dans lequel les bords de préhension convergents comprennent éventuellement des bords de coupe pouvant abouter mutuellement (111, 113), dans lequel éventuellement une surface longitudinale interne (127, 129) de chacune des lattes de préhension (105, 107) s'étend parallèlement à l'un adjacent des bords tranchants convergents (123, 125) de la lame en forme de coin (103), dans lequel le porte-couteau (71) comprend éventuellement une tige de connexion (101) le long de laquelle les éléments de préhension (97, 99) sont reliés de manière coulissante à l'élément de coupe (95) parallèlement au plan de transport, pour un déplacement en commun.

10. L'appareil (45) selon l'une quelconque des revendications précédentes 1 à 9, dans lequel l'unité de guidage (69) comprend une paire de pistes de guidage latérales (91, 93), par ex. comprennent chacune au moins deux tiges de guidage parallèles (91a, 91b, 93a, 93b), opposées à une autre convergeant dans une direction en amont de l'unité de guidage (69), dans lequel les lattes de préhension (105, 107) sont éventuellement montées sur les pistes de guidage latérales (91, 93) pour un mouvement convergent vers l'élément de coupe (95) du porte-couteau (71), dans lequel éventuellement l'élément de coupe (95) et les éléments de préhension (97, 99) sont agencés pour converger vers un point de rencontre commun.

11. L'appareil (45) selon l'une quelconque des revendications précédentes 1 à 10, dans lequel l'unité formant grappin (59) comprend un élément de nettoyage (115) pour nettoyer le porte-couteau lors du passage de la position étendue à la position rétractée,
dans lequel le l'élément de nettoyage (115) est éventuellement un bloc en forme de coin avec une surface inclinée, et/ou l'élément de nettoyage est éventuellement pourvu d'au moins une ouverture pour fournir un jet de gaz, de préférence de l'air, pour retirer les tissus de volaille de l'élément de nettoyage.

12. L'appareil (45) selon l'une quelconque des revendications précédentes 1 à 11, dans lequel le porte-couteau (71) est agencé pour former un volume au moins partiellement fermé (137) autour de la furcula en se déplaçant dans une position étendue.

13. L'appareil (45) selon l'une quelconque des revendications précédentes 1 à 12, dans lequel le cadre de guidage (51) comprend des buses de nettoyage (1 10a, 110b) pour fournir un jet d'eau pour nettoyer le porte-couteau (71).

14. Un système de filetage de poitrine de volaille (1) comprenant :
l'appareil permettant d'enlever la furcula (45) selon l'une des revendications 1 à 13 ;
un convoyeur (23) agencé pour se déplacer sur un chemin de convoyeur (47), et
au moins un mandrin (25) agencé pour porter une carcasse de volaille, ledit au moins un mandrin (25) étant relié au convoyeur (23) pour un déplacement à travers le chemin de convoyeur (47),
dans lequel l'unité formant grappin de furcula (59) est agencée pour l'engagement par l'un parmi le mandrin (25) et le composant de transport.

15. Un procédé pour retirer une furcula d'au moins une couronne de poitrine de volaille en utilisant un appareil permettant d'enlever furcula (45) selon l'une des revendications 1 à 13 dans un système de filetage de poitrine de volaille (1) selon la revendication 14, comprenant les étapes consistant à :
couper le tendon et les tissus entourant la furcula ; et
retirer la furcula de l'au moins une couronne de poitrine de volaille.
